# EUROPEAN PATENT SPECIFICATION

(11) **EP 3 862 493 B1**
(45) Date of publication and mention of the grant of the patent: **06.08.2025**
(21) Application number: 21156107.1
(22) Date of filing: 09.02.2021
(51) Int. Cl.: E03B 3/34, E03B 3/15, E02D 19/00, E21B 43/00

(54) **INFILTRATION HEAD, SYSTEM AND METHOD FOR DISPENSING WATER INTO AN AQUIFER**
INFILTRATIONSKOPF, SYSTEM UND VERFAHREN ZUR ABGABE VON WASSER IN EINEN GRUNDWASSERLEITER
TÊTE D'INFILTRATION, SYSTÈME ET PROCÉDÉ DE DISTRIBUTION D'EAU DANS UN AQUIFÈRE

(30) Priority: 10.02.2020 NL 2024872
(43) Date of publication of application: 11.08.2021
(73) Proprietor: Stichting O2DIT, 7332 BE Apeldoorn (NL)
(72) Inventor: HIJLKEMA, Bernardus Ludgerus Lubertus, 7332 BE Apeldoorn (NL)
(74) Representative: van Trier, Norbertus Henricus Gerardus

(56) References cited:
- DE-A1- 102011 119 178
- DE-A1- 102013 013 851
- KR-A- 20170 001 202
- US-A1- 2010 213 396

## Description

### BACKGROUND

The invention relates to an infiltration head for dispensing water into an aquifer. The invention further relates to a system for dispensing water into an aquifer, said system comprising the infiltration head according to the present invention. The invention further relates to a method for dispensing water into an aquifer using the system according to the present invention.

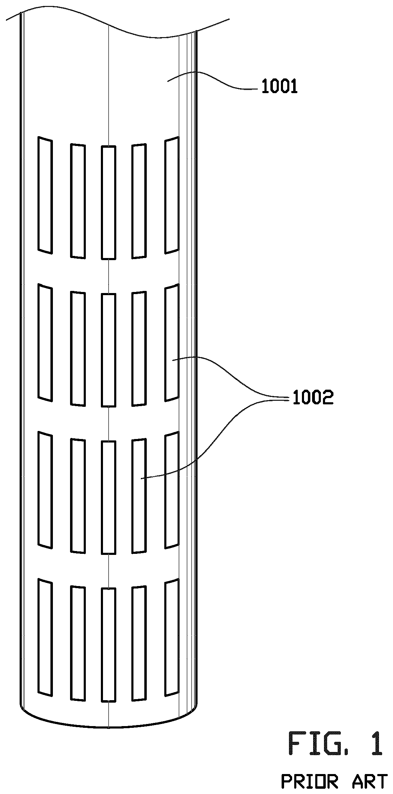

Dispensing water into an aquifer or ground layer is a process that is used for instance for ground water level control. A known system for dispensing water into a ground layer is shown in figure 1. The system comprises a slotted tube (1001) having slots (1002) along at least a part of its length. The tube (1001) is placed in the ground and water is supplied to the top opening. The slots (1002) allow the water to flow from the interior of the tube (1001) into the ground layer surrounding the pipe (1001).

DE102011119178A1 and DE102013013851A both disclose an infiltration unit for dispensing water into an aquifer. The infiltration unit comprises a pipe with a nozzle filter which is introduced into the aquifer. When water is introduced via the pipe into the nozzle filter filled with groundwater a spherical pressure wave occurs due to the water resistance. The propagation of the pressure wave in the aquifer at the infiltration point results in an inflow and an outflow causing a hydrostatic groundwater barrier. As a result of the fact that the groundwater barrier does not receive any more groundwater from the inflow, the suction tension or the wineskin effect occurs, which sucks the rainwater from the nozzle filter into the outflow of the aquifer.

### SUMMARY OF THE INVENTION

A disadvantage of the known system is that the water flow through the slots is subjected to a large pressure loss. Thus, the water is ejected from the slots at a relatively low flow velocity and, as a consequence, the water is only dispensed in a small area around the slotted pipe. Hence, the water is not dispensed effectively and the flow rate of the dispensed water is limited.

It is an object of the present invention to provide an infiltration head, a system and a method for dispensing water into an aquifer, which can dispense the water into the ground more effectively.

According to a first aspect, the invention provides an infiltration head for dispensing water into an aquifer, wherein the infiltration head comprises an infiltration tube having a first end and a second end and a central axis extending in an axial direction between said first end and said second end, wherein the first end is arranged for allowing a water flow to enter the infiltration tube, wherein the infiltration tube comprises a circumferential wall extending circumferentially about the central axis in a circumferential direction, wherein one or more apertures are provided at an axial position between the first end and the second end, wherein said one or more apertures extend through said circumferential wall in a radial direction transverse to the central axis, wherein the infiltration head further comprises a deflector which is positioned within the infiltration tube at or near the axial position of the one or more apertures, wherein the deflector comprises a deflector body having a deflection portion which is configured for deflecting a flow direction of the water flow from a first direction parallel or substantially parallel to the central axis to a second direction towards the one or more apertures.

During use, the water flow enters the infiltration tube and flows through the infiltration tube with a flow direction in the first direction. When the water flow reaches the deflector, the water flows along the deflection portion and the flow direction of the water flow is gradually changed from the first direction to the second direction towards the one or more apertures. Thereafter, the water flow exits the infiltration tube through the one or more apertures. Because of the gradual change from the first direction to the second direction, disturbances in the water flow can be reduced or prevented. Therefore, turbulence in the water flow within the infiltration pipe, in particular near the one or more apertures, can be reduced or prevented, resulting in that pressure losses can be kept at minimum. As a result, the water flow can exit the infiltration head at a higher flow rate. Hence, when the water flow is supplied to the infiltration head under pressure, said water flow can be forced through the one or more apertures to penetrate the aquifer, thereby forming an associated cavity in the aquifer. Said cavity can extend away from the infiltration head over a penetration depth of several meters. The cavities have a substantially conical shape, tapering outwards away from the one or more apertures, due to the pressure difference over each of the one or more apertures. The water flow can be dispensed into the aquifer over the entire external surface of the cavity. Consequently, the water flow can be dispensed into the aquifer more effectively.

Additionally, because the water flow penetrates the aquifer, an upward backflow of water on the outside of the infiltration tube towards the surface can be reduced or in the ideal case prevented.

In an embodiment thereof, the second direction is transverse to the central axis. An aquifer generally extends in a substantially horizontal direction. Hence, when the infiltration head is inserted into the ground in a substantially vertical direction, the water flow can be directed in or substantially in the direction of the aquifer.

In a further embodiment, the deflection portion is tapered towards the first end of the infiltration tube. In an embodiment thereof, the deflection portion has a conical shape, a substantially conical shape or a frusto-conical shape. During use, the water flow flows along the deflection portion, therewith deflecting the flow direction from the first direction to the second direction. In other words, the water flow is gradually deflected away from the first direction and towards the second direction. Hence, the flow hits the surface of the deflection portion at an obtuse angle. In other words, the flow direction is not changed abruptly and turbulence can be reduced. Consequently, energy losses due to turbulence can be reduced or ideally prevented, resulting advantageously in an outflow velocity which is substantially equal to or higher than the inflow velocity of the water.

In a further embodiment, two or more apertures are provided at or near the axial position between the first end and the second end, wherein said two or more apertures extend through said circumferential wall in the radial direction transverse to the central axis. In an embodiment thereof, the two or more apertures are evenly distributed in the circumferential direction. The water flow generally exits the apertures in a substantially conical shaped jet. By evenly distributing the apertures, the apertures are apart in the circumferential direction over a maximum possible distance. Hence, interference between the jets can be prevented. The two apertures can distribute the water flow over a larger angular range in the circumferential direction. Hence the water flow can be dispensed over a larger area.

In a further embodiment, three apertures are provided at or near the axial position between the first end and the second end, wherein said three apertures extend through said circumferential wall in the radial direction transverse to the central axis. In an embodiment thereof, said three apertures are arranged at mutual angles of one-hundred-and-twenty degrees in the circumferential direction. The water flow generally exits the apertures in a substantially conical shaped jet. By evenly distributing the apertures, interference between the jets can be prevented. The three apertures can distribute the water flow over a larger angular range in the circumferential direction. Hence the water flow can be dispensed over a larger area. Hence, the water flow can be dispensed into the aquifer more evenly.

In a further embodiment, the infiltration tube defines an infiltration tube flow area between the axial position and the first end and wherein each of the two or more apertures has an aperture flow area, wherein the infiltration tube flow area is larger than the sum of the aperture flow areas. Hence, the water flow can exit the apertures at an higher flow speed than the flow speed at the first end. Advantageously, the water flow can penetrate into the aquifer over a greater penetration dept.

In a further embodiment, the deflector comprises one or more through holes extending through the deflector body in the axial direction for allowing at least a part of the water flow to flow past the deflector in the axial direction. Thus, at least a part of the water flow can flow past the deflector. Hence, a further infiltration head, or a further deflector may be used downstream of the deflector to dispense at least a part of the water flow in the ground at a further axial position.

In an embodiment thereof, the one or more through holes are offset in the circumferential direction with respect to the one or more apertures. During use, the deflection element can deflect a part of the water flow through the apertures at the location of the apertures in the circumferential direction. Additionally, the deflector can allow a part of the water to flow past the deflector at the location of the through holes. Hence, interference between the water flow through the one or more holes and the water flow through the apertures can be kept at a minimum. Hence, a disturbance in the water flow upstream of the one or more apertures can be prevented.

In a further embodiment, the deflector further comprises one or more pipes, each extending through a respective one of the one or more through holes, and wherein the one or more pipes protrude from the deflector towards the first end of the infiltration tube. Thus, at least a part of the water flow can be guided through the deflector via the tubes. Consequently, a disturbance in the water flow through the infiltration tube can be kept to a minimum or in the ideal case can be prevented.

In a further embodiment, the infiltration head further comprises a filter assembly which is arranged circumferentially about at least a part of the infiltration tube in the axial direction and/or the circumferential direction for preventing soil from entering the infiltration tube through said one or more apertures. When the water flow impacts the aquifer, soil, sand and/or dirt are dislodged from the aquifer. The filter assembly can prevent said soil, sand and/or dirt from entering the infiltration tube. Consequently, contamination and/or blockage of the infiltration tube can be prevented.

In an embodiment thereof, the filter assembly comprises a first filter and a second filter, wherein the second filter is arranged concentric with respect to the first filter and spaced apart from said first filter in the radial direction. In an advantageous embodiment thereof, the first filter has a first mesh size and is configured to prevent sand or soil particles to pass through the first filter. In a further advantageous embodiment, the second filter has a second mesh size which is larger than the first mesh size. The first filter can prevent soil particles from entering the infiltration tube. Hence, a clogging of the infiltration tube due to accumulation of soil can be prevented. The second filter can provide structural integrity. Moreover, the second filter can prevent larger objects from damaging the first filter.

In a further embodiment, the infiltration tube comprises one or more slotted tube portions, wherein said slotted tube portion comprises a plurality of slots extending through the circumferential wall in the radial direction. The one or more slotted tube portions can contribute to the dispersion of the water flow into the aquifer. Moreover, the slotted tube portions can benefit from the cavities created by the water flow forced through the apertures..

In a further embodiment thereof, at least one slotted tube portion of the one or more slotted tube portions is located between the first end and the axial position of the one or more apertures. Hence, at least a part of the water flow can be dispensed into the aquifer before reaching the deflector. Thus, when a flow through the apertures is blocked, the water flow can be dispensed into the aquifer via the slotted tube portion.

In a further embodiment, at least one slotted tube portion of the one or more slotted tube portions is located between the axial position of the one or more apertures and the second end. Hence, a part of the water flow that has flown past the deflector can be dispensed into the aquifer via the slotted tube portion.

In a further embodiment, the one or more apertures are first apertures provided at a first axial position between the first end and the second end and wherein the deflector is a first deflector, wherein the infiltration tube is further provided with one or more second apertures which extend through the circumferential wall in the radial direction at a second axial position between the first axial position and the second end, wherein the infiltration head further comprises a second deflector which is positioned within the infiltration tube at or near the second axial position and which is configured for deflecting a flow direction of the water flow from the first direction to a third direction towards the one or more second apertures. In other words, the infiltration head can dispense the water flow at two distinct axial positions. Hence, the infiltration head can dispense the water in one or more aquifers at the same time.

In an embodiment thereof, the third direction is transverse to the central axis. Hence, the water flow can be directed in or substantially in the direction of the aquifer.

In a further embodiment, the number of the one or more second apertures corresponds to the number of the one or more first apertures. In a further embodiment, each of the one or more second apertures is offset in the circumferential direction with respect to the one or more first apertures. Hence, interference of the jets of the water flow exiting the apertures can be kept at a minimum or prevented. Consequently, the water can be distributed more evenly. Hence, a larger flow rate can be affected.

In a further embodiment, the infiltration tube comprises a slotted tube portion which is located between the first axial position and the second axial position, wherein said slotted tube portion comprises a plurality of slots extending through the circumferential wall in the radial direction. As discussed above, the slotted tube portion can contribute to the dispersion of the water flow into the aquifer, in particular into the cavities created by the water flow forced through the apertures. Moreover, the combination of the slotted tube and the apertures can affect that the water flow dispensed from the slotted tube is dispersed more easily due to the cavities created by the water flow forced through the apertures.

In a further advantageous embodiment, the infiltration tube has an internal diameter between thirty and two-hundred millimeters, preferably between forty and one-hundred-and-fifty millimeters, more preferably between fifty and one-hundred millimeters.

According to a second aspect, the invention provides a system for dispensing water into an aquifer, wherein the system comprises an infiltration head, preferably an infiltration head according to the first aspect of the invention, and a water source, wherein the infiltration head is in fluid communication with said water source.

The system comprises the infiltration head as discussed above. Hence, the system comprises at least the same advantages as described in relation to the infiltration head according to the first aspect of the invention.

In an embodiment thereof, the system comprises a fluid duct for connecting the infiltration head to the water source. Said fluid duct may for example be a fluid pipe, a conduit or a hose. A fluid duct can be an efficient way to supply the water flow to the infiltration head.

In an embodiment thereof, the infiltration tube of the infiltration head comprises at least a part of the fluid duct. In other words, the infiltration tube and the fluid duct may be formed as a single duct. A single duct may be cheaper to produce. Moreover, a single duct can be less prone to defects.

In an alternative embodiment thereof, the fluid duct is a fluid pipe, and wherein the infiltration head is located within the fluid duct, wherein the fluid duct comprises one or more through holes in the radial direction corresponding to and in line with the one or more apertures in the infiltration tube. Thus, the infiltration head can be positioned within the fluid duct. Consequently, the infiltration head can be better protected while efficiently dispensing the water flow in the aquifer.

In a further embodiment, the system further comprises a pump and/or a drain operationally connected to the water source and the fluid duct for supplying the water flow to the infiltration head via said fluid duct. A pump or drain can supply the water flow to the infiltration head at a predetermined flow rate. Hence, the water can be ejected from the apertures at a constant velocity. Consequently, the water flow can penetrate deeper into the aquifer.

According to a third aspect, the invention provides a method for dispensing water into an aquifer using a system as described above, wherein the method comprises the steps of:
drilling a well bore;
inserting the fluid duct and the associated infiltration head in said well bore; and
supplying a water flow to the infiltration head via the fluid duct.

The method comprises the use of the system, hence, the method has at least the advantages as described in relation to the system according to the second aspect of the invention.
In an embodiment thereof, the water flow is supplied to the infiltration head at a pressure of at least 0.2 bar, preferably at least one bar, most preferably at least 2 bar. Hence, the water can be ejected from the apertures more forcefully. Consequently, the water flow can penetrate deeper into the aquifer. Thus, the water flow can be dispensed more effectively.

In a further embodiment, the method comprises the steps of:
(i) providing a drill formed by a drilling tube provided at an outer end with a drilling head with a central opening;
(ii) inserting the drill into the ground while simultaneously supplying a drilling liquid into the drill, wherein the supplied drilling liquid initially wells up via the drilling head along the outer side of the drilling tube until the drilling head has reached a depth at which the supplied liquid no longer wells up;
(iii) ceasing insertion of the drill into the ground and supply of drilling liquid into the drill as soon as the supplied liquid no longer wells up;
(iv) inserting into the drilling tube the fluid duct and the associated infiltration head according to the system such that the infiltration head is at or near the depth at which the supplied liquid no longer wells up;
(v) removing the drill from the ground; and
(vi) supplying the water flow to the infiltration head via the fluid duct. Thus, the infiltration head can be positioned at or near a depth at which liquid is dispensed in the ground more effectively. Hence, the infiltration head can dispense the water flow supplied thereto more effectively into the aquifer.

### BRIEF DESCRIPTION OF THE DRAWINGS

The invention will be elucidated on the basis of an exemplary embodiment shown in the attached schematic drawings, in which:
Figure 1 shows an isometric view of a slotted pipe for dispensing water into an aquifer according to the prior art;
Figure 2 shows an isometric view of a system for dispensing water into an aquifer, said system comprising an infiltration head according to an embodiment of the present invention;
Figure 3 shows the infiltration head according to figure 2;
Figure 4 shows a section view of the infiltration head according to the line IV-IV in figure 3;
Figure 5 shows a section view of the filtration head according to the line V-V in figure 4;
Figures 6A and 6B show the section view of figure 5 when the infiltration head is in operation;
Figure 7 shows an alternative system for dispensing water into an aquifer, said system comprising an alternative infiltration head according to an alternative embodiment of the present invention;
Figure 8 shows a section view of the alternative infiltration head according to the line VIII-VIII in figure 7;
Figure 9 shows a section view of the filtration head according to the line IX-IX in figure 8;
Figure 10 shows a further alternative system for dispensing water into an aquifer, said system comprising a further alternative infiltration head according to a further alternative embodiment of the present invention;
Figure 11 shows a section view of the alternative infiltration head according to the line XI-XI in figure 10;
Figure 12 shows a section view of the filtration head according to the line XII-XII in figure 11;
Figure 13 shows a further alternative system for dispensing water into an aquifer, said system comprising a further alternative infiltration head according to a further alternative embodiment of the present invention;
Figure 14 shows a further alternative system for dispensing water into an aquifer, said system comprising a further alternative infiltration head according to a further alternative embodiment of the present invention;
Figure 15 shows a section view of the further alternative infiltration head according to the line XV-XV in figure 14;
Figure 16 shows a section view of the filtration head according to the line XVI-XVI in figure 15; and
Figure 17 shows a detail of a section view of an alternative infiltration head.

### DETAILED DESCRIPTION OF THE INVENTION

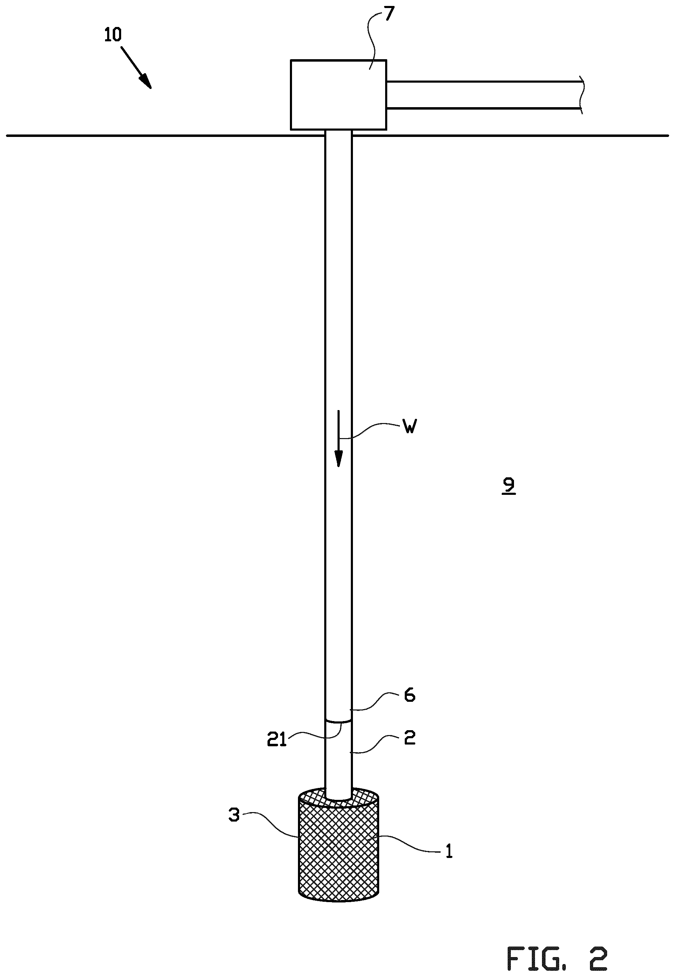

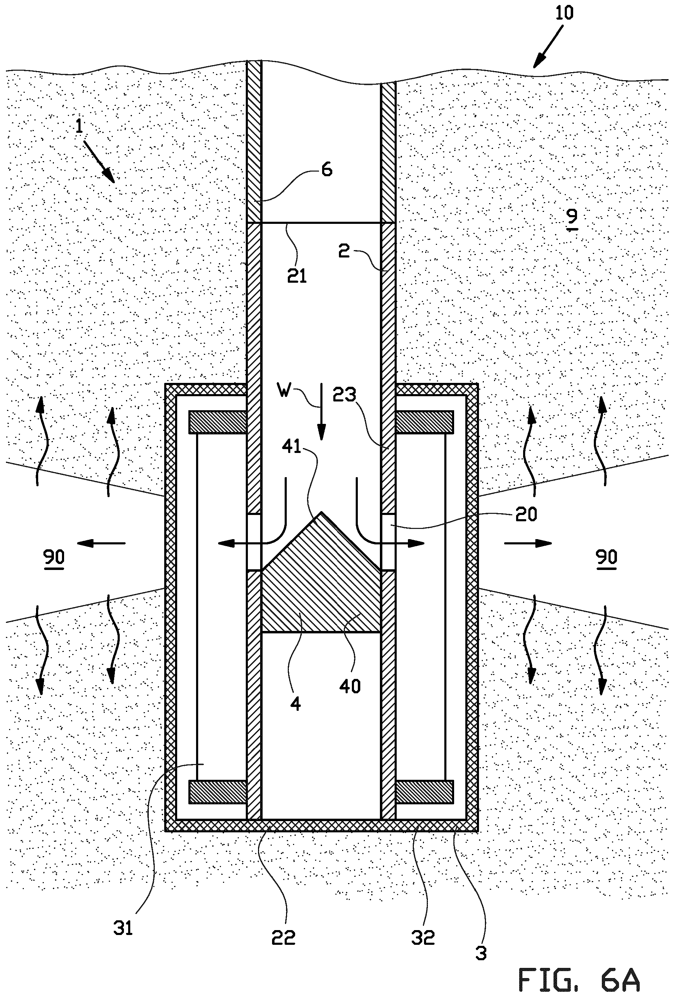

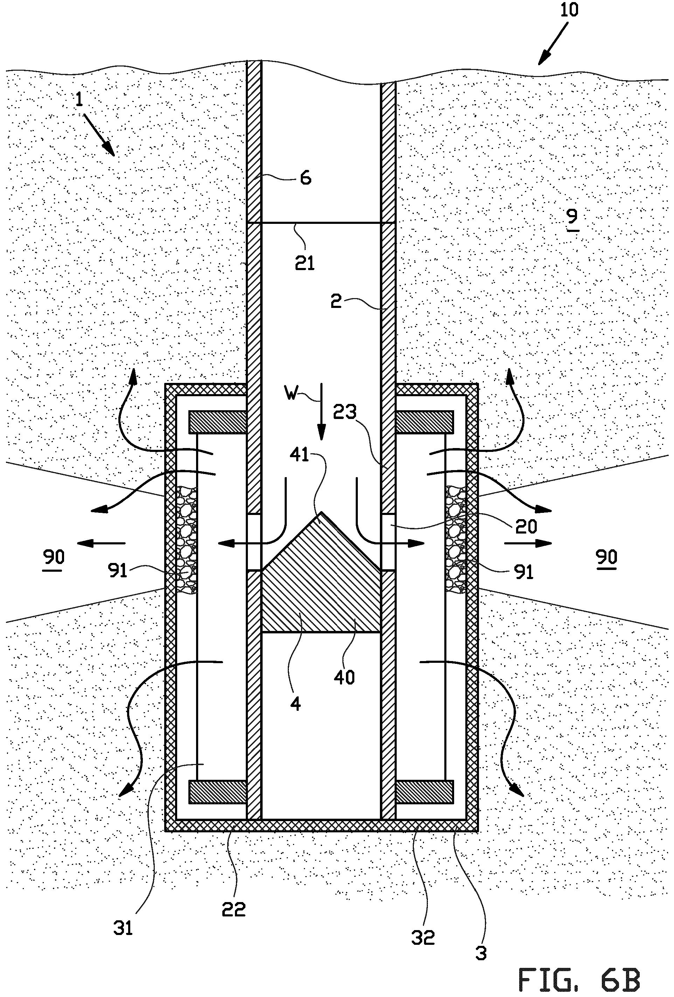

Figures 2, 6A and 6B show a system 10 for dispensing water into a ground layer or aquifer 9 according to an exemplary embodiment of the present invention. The infiltration system 10 comprises an infiltration head 1 for dispensing water into the aquifer 9. The system 10 further comprises a water source (not shown) which is connected in fluid communication to the infiltration head 1. In particular, the system 10 further comprises a fluid duct 6 for connecting the infiltration head 1 to the water source.

In this embodiment, the fluid duct 6 is a fluid pipe which is connected to the infiltration head 1. The system 10 further comprises a pump 7 which is operationally connected to the water source and the fluid duct 6 for supplying a water flow W to the infiltration head 1 via the fluid duct 6. The pump 7 is arranged to supply the water flow W to the infiltration head at a pressure or overpressure of at least 0.2 bar. Preferably the pump 7 is arranged to supply the water flow W at a pressure of at least one bar, more preferably at least two bar. Alternatively or additionally, the system may comprise a drain which is operably connected to the water source and the infiltration head 1 for supplying the water flow W to the infiltration head 1.

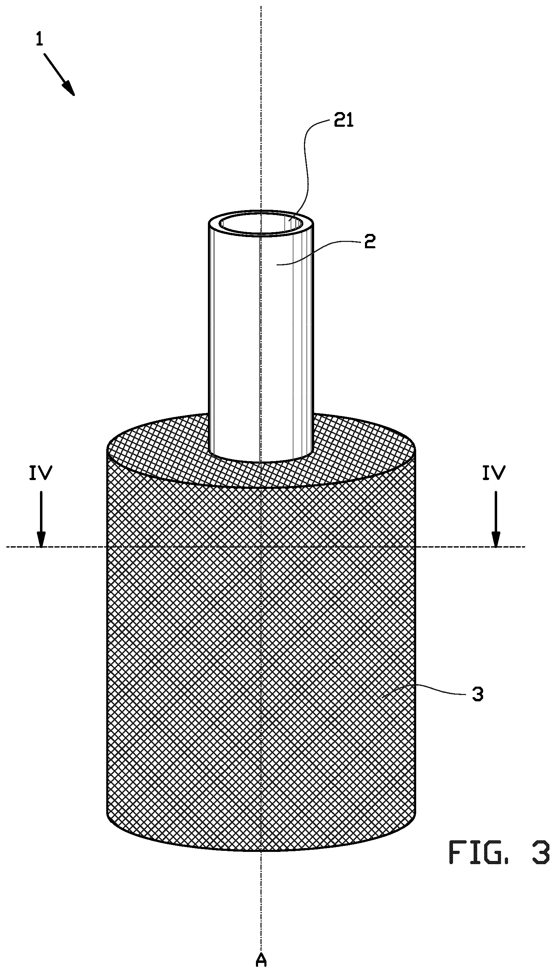

The infiltration head 1 is shown in more detail in figures 3-5, 6A and 6B. The infiltration head 1 comprises an infiltration tube 2 and a filter assembly 3 arranged around said infiltration tube 2. In the embodiment as shown, the infiltration tube 2 is circular or substantially circular in cross section. The infiltration tube 2 is connectable to the fluid duct 6 using a suitable connector (not shown). Alternatively, the infiltration tube 2 may comprise the fluid duct 6. In other words, the infiltration tube 2 and the fluid duct 6 may be formed as a single tube or duct.

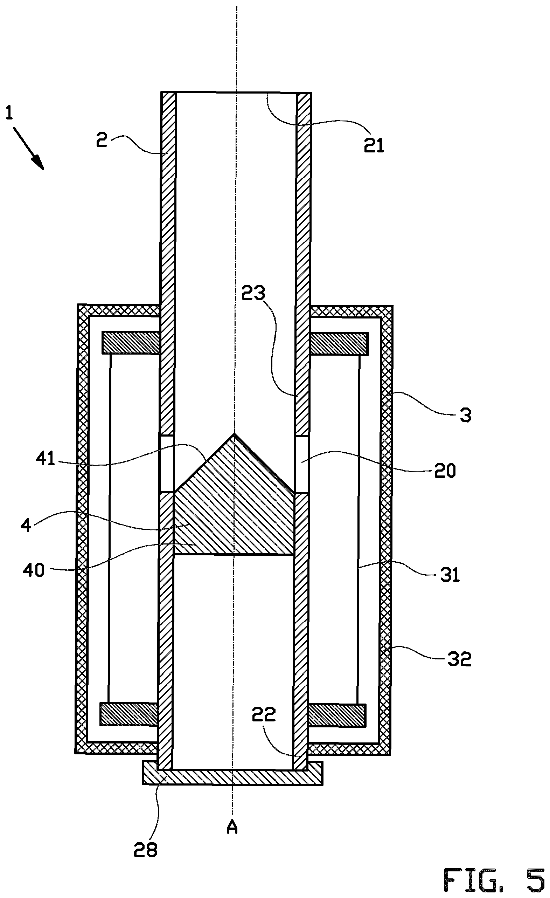

As is best shown in figures 5, 6A and 6B, the infiltration tube 2 comprises a first end 21 and a second end 22 opposite to the first end 21. The infiltration tube 2 comprises a central axis A which extends in an axial direction X between the first end 21 and the second end 22. The infiltration tube 2 comprises a circumferential wall 23 which extends circumferentially about the central axis A in a circumferential direction C. The circumferential wall defines an input opening at the first end 21. The first end 21 is arranged to allow the water flow W to enter the infiltration tube 2 at said input opening. The second end 22 is closed off by a lid or a stop.

A typical infiltration tube 2 has an internal diameter between thirty and two-hundred millimetres. Preferably, the internal diameter is between forty and one-hundred-and-fifty millimetres. More preferably, the internal diameter is between fifty and one-hundred millimetres.

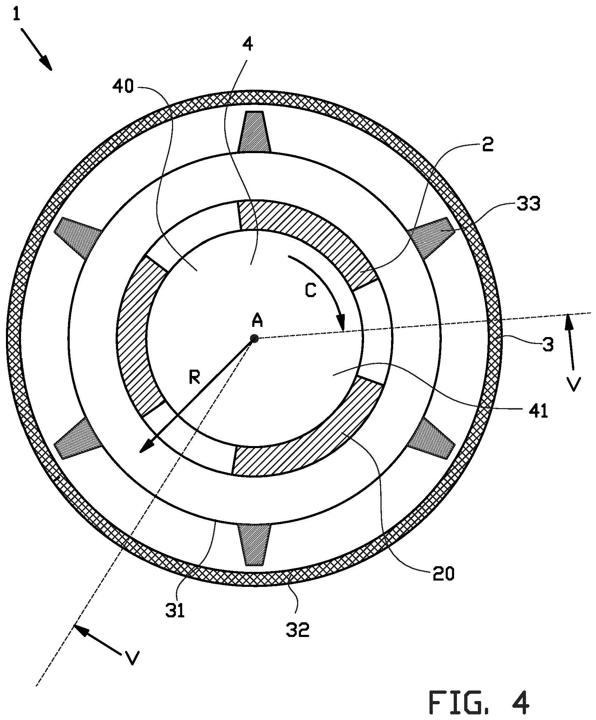

As is best shown in figure 4, the infiltration tube 2 is further provided with three apertures 20 in the circumferential wall 23. Said apertures 20 are provided at an axial position along the central axis A. The apertures 20 extend through the circumferential wall 23 in a radial direction R transverse to the central axis A. The apertures 20 are evenly spaced in the circumferential direction C. In other words, each aperture 20 is offset in the circumferential with respect to an adjacent aperture 20 by one-hundred-and-twenty degrees.

The apertures 20 have a circular or substantially circular shape. The apertures 20 each have an aperture flow area. Each aperture flow area corresponds to the cross-sectional area of the respective aperture 20. The infiltration tube 2 defines an infiltration tube flow area between the axial position and the first end 21. Said infiltration tube flow area may be a nominal flow area or the flow area of the infiltration tube 2 at the first end 21. The apertures are configured such that the sum of the aperture flow areas is smaller than the infiltration tube flow area. In an embodiment comprising only one aperture 20 (not shown), said one aperture 20 is configured, such that its aperture flow area is smaller than the infiltration tube flow area. For example, the infiltration tube 2 may have an internal diameter of fifty millimetres and the apertures 20 may have a diameter of sixteen millimetres.

As is best shown in figures 5, 6A and 6B, the infiltration head 1 is further provided with a deflector 4. Said deflector 4 is arranged within the infiltration tube 2 at or near the axial location of the apertures 20. The deflector 4 may be fixed to the infiltration tube 2 by conventional fixing means, such as gluing, bolting or welding. The deflector 4 comprises a deflector body 40 having a deflector portion 41 which is configured for deflecting the water flow W from a first direction parallel or substantially parallel to the central axis A towards a second direction towards the apertures 20. In particular, said second direction is directed transverse to the central axis A.

The deflection portion 41 tapers towards the first end 21. In particular, the deflection portion 41 has a conical or a substantially conical shape. Alternatively, the deflection portion 41 may have a frustum shape or a frusto-conical shape. The deflection portion 41 is located at or near the axial location of the apertures 20. Preferably, the lower edge of the deflection portion 41 is located at the lower edge of the apertures 20.

As is shown in figures 4-6B, the filter assembly 3 is arranged circumferentially about the infiltration tube 2 at the location of the apertures 20. More particularly, the infiltration assembly 3 is arranged concentrically about the infiltration tube 2. The filter assembly 3 is configured for preventing soil, dirt or ground from entering the apertures 20. In the embodiment as shown, the filter assembly 3 extends over a part of the infiltration tube 2 in the axial direction X. The filter assembly 3 fully surrounds the infiltration tube 2 in the circumferential direction C.

The filter comprises a first filter 31 and a second filter 32. The second filter 32 is arranged concentric with respect to the first filter 31. In particular, the second filter 32 is arranged radially outward and spaced apart from the first filter 31. In particular, the first filter 31 has a first mesh size which is configured to prevent soil particles from passing through the first filter 31. The first filter 31 is provided with ribs 33 to provide structural integrity.

The second filter 32 has a mesh size which is larger than the first mesh size. The second filter 32 may prevent larger or heavier particles, such as small rocks from damaging the first filter 31. The first filter 31 and the second filter 32 are mounted to the infiltration tube 2.

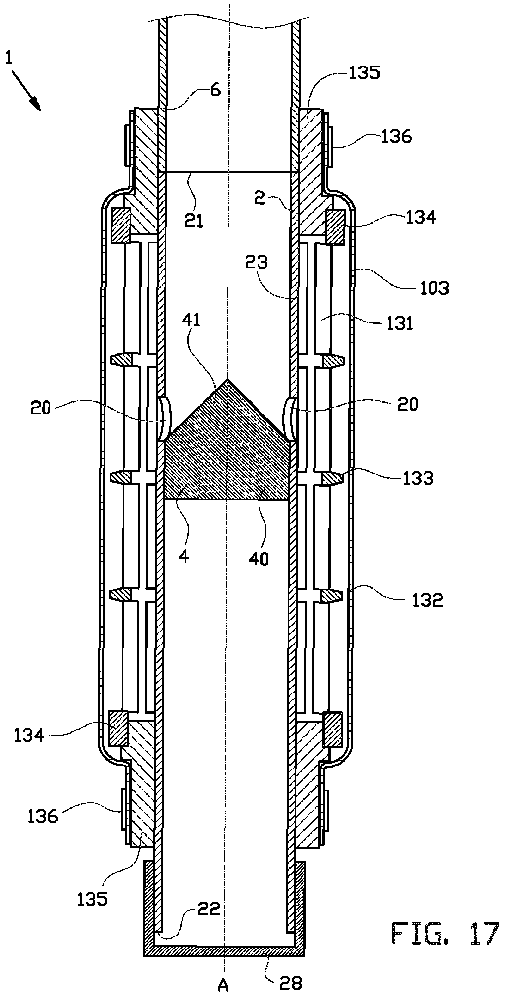

An alternative filter assembly 103 is shown in figure 17. The alternative filter assembly 103 comprises a first filter 131 and a second filter 132 as described above. The alternative filter assembly 103 further comprises two first collars 135 for mounting the alternative filter assembly 103 to the infiltration tube 2. Said first collars 135 at least partially surround the infiltration tube 2 in the circumferential direction C. The first collars 135 may for example be mounted to the infiltration tube 2 by clamping, pinching, welding or gluing. In the embodiment as shown, the first collar 135 at the first end 21 of the infiltration tube 2 is further mounted to the fluid duct 6 for connecting said fluid duct 6 to the infiltration tube 2.

The ribs 133 of the first filter 131 comprise circumferential ribs or stiffeners, extending in the circumferential direction C, and longitudinal ribs or stiffeners, extending parallel to the central axis A. The ribs 133 further comprise two circumferential outer ribs 134, each arranged at the longitudinal ends of the first filter 131. The first filter 131 is mounted to the first collars 134 via said outer ribs 134.

The second filter 132 is mounted to the first collars 135 as well. In particular, the second filter 132 is mounted to the first collars 135 by fasteners 136. The second filter 132 is located axially outward with respect to the first filter 131.

A method of dispensing the water flow W into the aquifer 9 using the system 10 according to the invention is described below.

First, a well bore is drilled in the ground and/or into the aquifer 9 for accommodating the infiltration head 1 and the associated fluid duct 6. Preferably, a drill is provided (not shown) that is formed by a drilling tube provided at an outer end with a drilling head with a central opening. Said drill is inserted into the ground while simultaneously supplying a drilling liquid into the drill for drilling said well bore. The supplied drilling liquid initially wells up via the drilling head along the outer side of the drilling tube. The drill is driven into the ground until the drilling head has reached a depth at which the supplied drilling liquid no longer wells up. Subsequently, the insertion of the drill into the ground is ceased. The supply of drilling liquid into the drill is ceased as well.

Then, the fluid duct 6 and the associated infiltration head 1 are inserted in the drilling tube. The infiltration head 1 is positioned such that it is located at or near the drilling depth at which the drilling liquid no longer wells up. Subsequently, the drill is removed from the ground. Alternatively, the drill may be removed prior to inserting the infiltration head 1 and the associated fluid duct 6 into the well bore.

As shown in figure 6A, the infiltration head 1 is connected to the fluid duct 6. The pump 7 is operationally connected between said infiltration head 1 and the water source to supply the water flow W to the infiltration head 1. The water flow W enters the infiltration head 1 at the first end 21 of the infiltration tube 2. The water flow W is then deflected by the deflector 4, in particular by the deflection portion 41, towards the apertures 20.

The water flow W is forced through the apertures 20 into the aquifer 9, thereby forming cavities 90 in said aquifer 9. The cavities 90 are cone shaped or substantially cone shaped. The water flow W is then dispersed into the aquifer 9 via said cavities 90.

When the cavities 90 have been formed, the water flow W may be supplied at a lower pressure. Preferably, said pressure is between 0.2 bar and two bar. For example, the infiltration head 1 may be connected to a drain. The water flow W may be induced by gravity. The water flow W may still be effectively dispensed into the aquifer 9 via the cavities 90.

As is shown in figure 6B, in the case of the gravity induced water flow W, soil particles 91 may accumulate between the first filter 31 and the second filter 32. For this reason, the filter assembly 3 extends beyond the apertures 20 in the axial direction X. Hence, the water flow may circumvent said accumulation of soil particles 91. Additionally, the accumulation of soil particles 91 may be removed by supplying the water flow W at a pressure as described above.

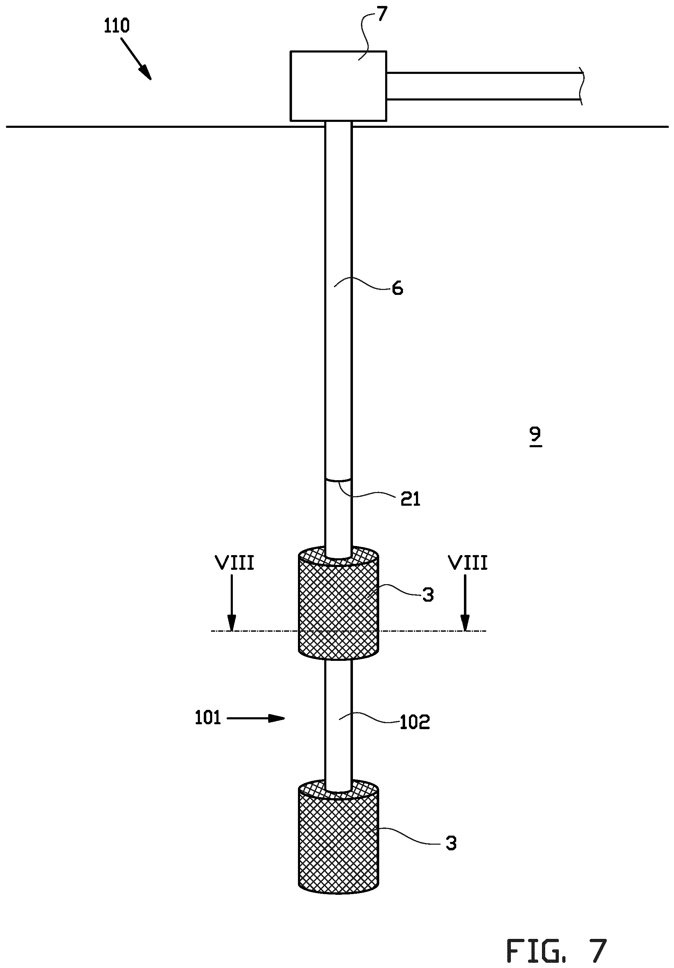

Figures 7-9 show an alternative system 110 comprising alternative infiltration head 101 according to an alternative embodiment of the present invention. The infiltration head 101 differs from the previously discussed embodiment in that it comprises an alternative infiltration tube 102 having three first apertures 20 at or near a first axial location along the central axis A and three second apertures 20 at or near a second axial location along the central axis A. The second axial location is located between the first axial location and the second end 22.

Preferably, the second apertures 20 are offset in the circumferential direction C with respect to the first apertures 20. In other words, each of the second apertures 20 is located between two adjacent first apertures 20 in the circumferential direction C. In this particular embodiment, the second apertures 20 are offset over an angle of sixty degrees with respect to the first apertures 20. The infiltration tube 102 may be partitioned in a first tube comprising the first apertures 20 and a connected second tube comprising the second apertures 20.

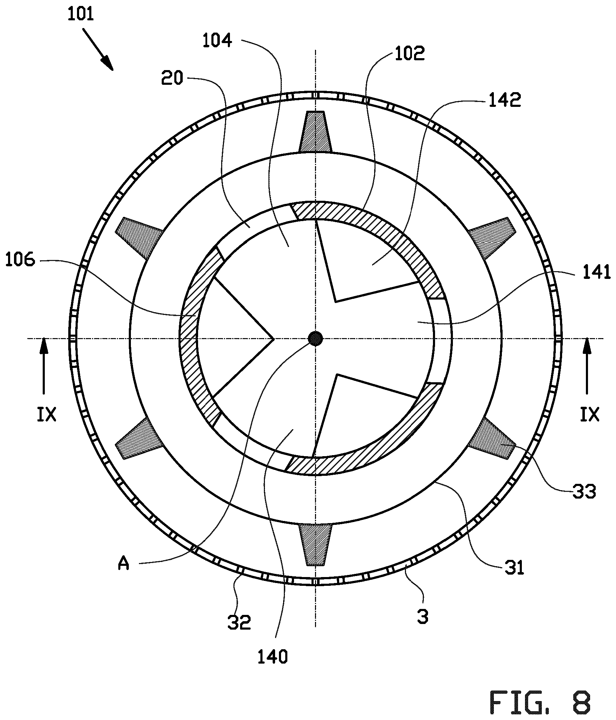

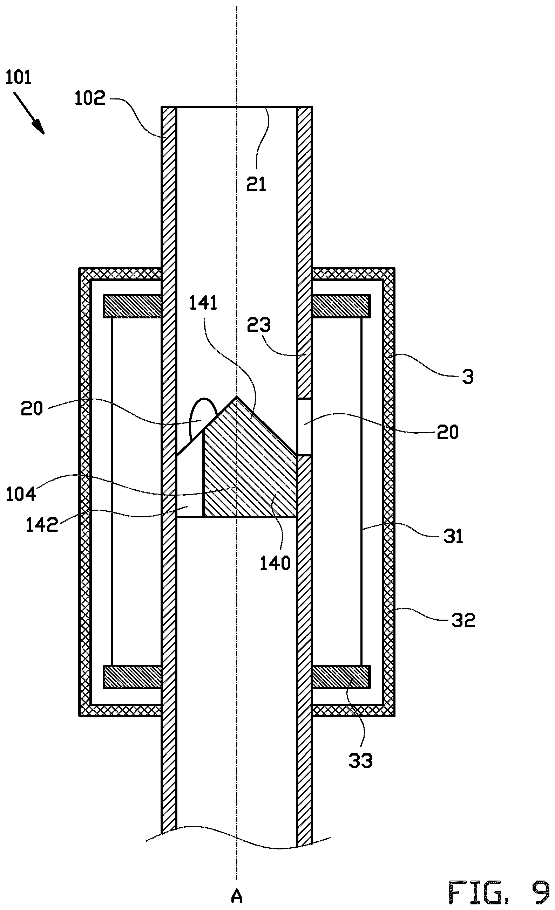

At the first axial location, the infiltration head 101 comprises a first deflector 104 and at the second axial location, the infiltration head comprises a second deflector 4. Said second deflector 4 is the deflector 4 as discussed above. The first deflector 104 is an alternative deflector as shown in figures 8 and 9.

Said first deflector 104 comprises an alternative deflector body 140 having an alternative deflection portion 141. The alternative deflection portion 141 is configured for deflecting at least the flow direction of at least a part of the water flow W from the first direction to a third direction towards the one or more second apertures 20.

The first deflector 104 differs from the previously second deflector 4 in that the first deflector 104 comprises three through holes 142 extending through the deflector body 140 in the axial direction X. The through holes 142 allow at least a part of the water flow W to flow past the first deflector 104 in the axial direction X. In particular, the through holes 142 allow at least a part of the water flow W to flow towards the second deflector 4. The through holes 141 are offset with the second apertures 20 in the circumferential direction C. Preferably, the through holes 141 have a combined flow area between twenty-five and fifty percent of the cross sectional area of the deflector body 104.

The infiltration head 101 comprises two filter assemblies 3 corresponding to the previously discussed filter assembly 3. One of said filter assemblies 3 is arranged at or near the first axial location and the other is arranged at or near the second axial location. In other words, one of the filter assemblies 3 is arranged to prevent soil from entering the first apertures 20 and the other is arranged to prevent soil from entering the second apertures 20. Alternatively, the infiltration head 101 may comprises a single filter assembly 3 extending over both the first apertures 20 and the second apertures 20.

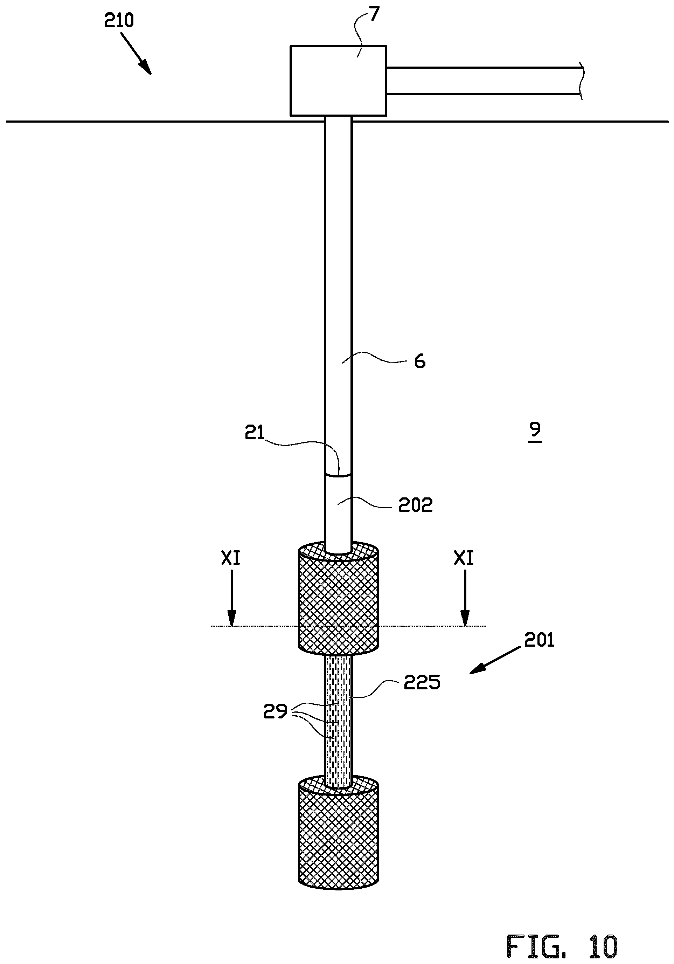

Figures 10-12 show a further alternative system 210 comprising a further alternative infiltration head 201 according to a further alternative embodiment of the present invention. As is shown in figure 10, the infiltration head 201 comprises an alternative infiltration tube 202 which differs from the previously discussed infiltration tube 102 in that a slotted tube section 225 is provided between the first axial position and the second axial position.

Said slotted tube section 225 comprises a plurality of slots 29 extending through the circumferential wall 23 in the radial direction R. Said slots 29 are smaller in cross section than the apertures 20. In other words, the flow area of each one of the slots 29 is smaller than the flow area of one of the apertures 20. For example, the slots 29 may have a width of 0,4 millimeter and a length of 40 millimeter.

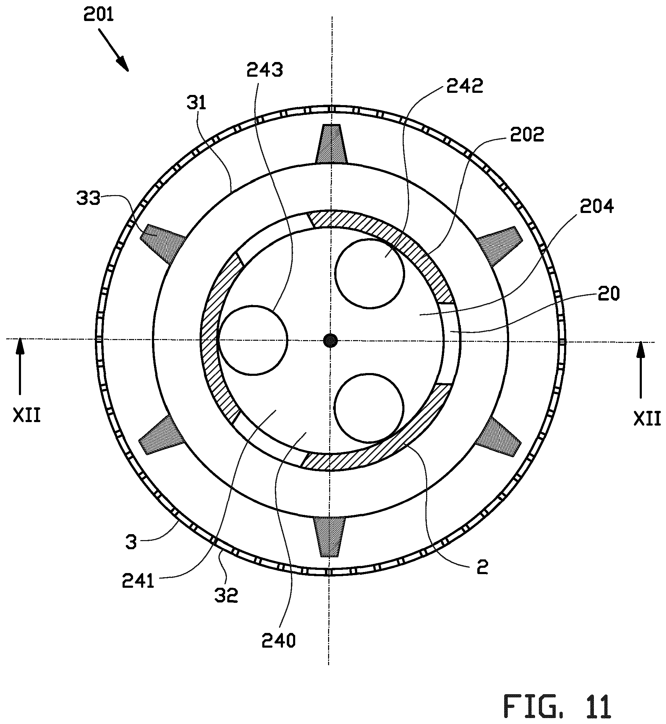

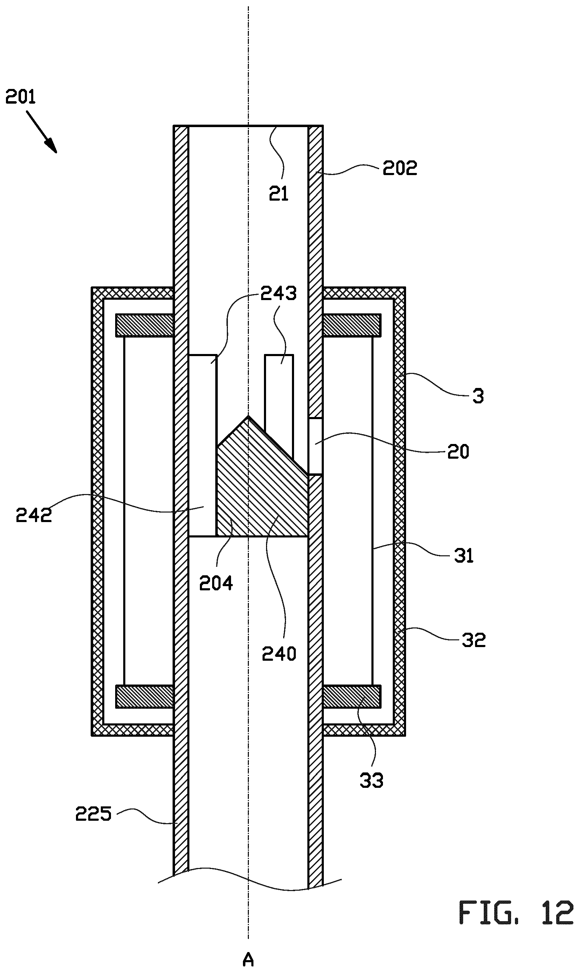

As is shown in figure 11 and 12, the infiltration head 201 further differs from previously discussed infiltration head 101 in that it comprises instead of the previously discussed first deflector 104 an alternative first deflector 204 at the first axial position. Said alternative first deflector 204 differs from the previously discussed first deflector 104 in that the alternative first deflector 204 further comprises three pipes 243. Each pipe 243 is arranged within a respective one of the through holes 242. In other words, the pipes 243 extend through the through holes 242. The pipes protrude from the alternative first deflector 204 towards the first end 21 of the infiltration tube 202.

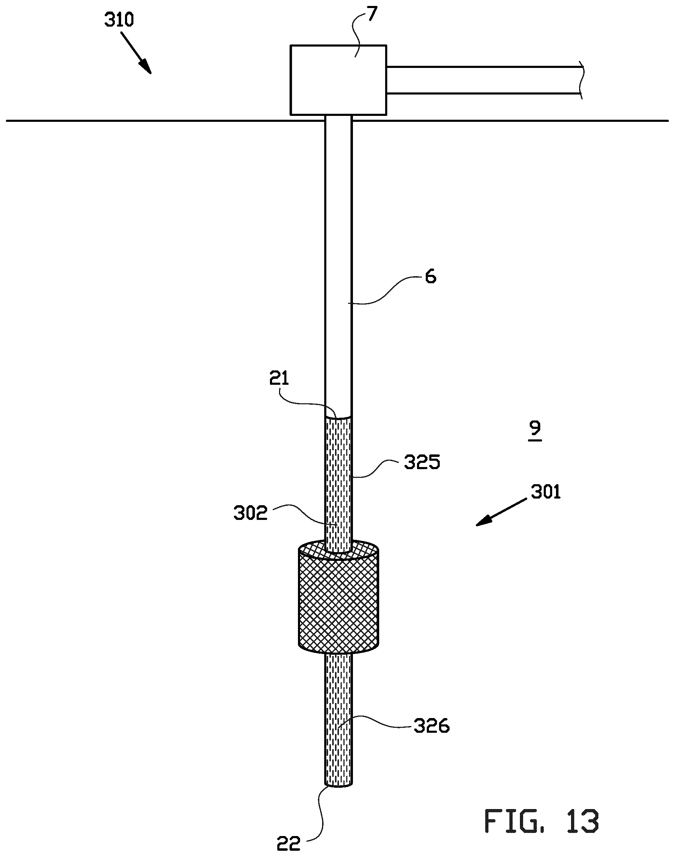

Figure 13 shows a further alternative system 310 comprising a further alternative infiltration head 301 according to a further alternative embodiment of the present invention. The infiltration head 301 comprises a further alternative infiltration tube 302 which differs from the previously discussed infiltration tubes 2, 102, 202 in that a first slotted tube portion 325 is provided adjacent to the first end 21 and a second slotted tube portion 326 is provided adjacent to the second end 22. The infiltration tube 302 comprises three apertures 20 at or near a first axial position along the central axis (not shown). The infiltration head 301 further comprises the deflector 204 with the through holes 242 and, optionally, the pipes 243 as described above at said second axial position.

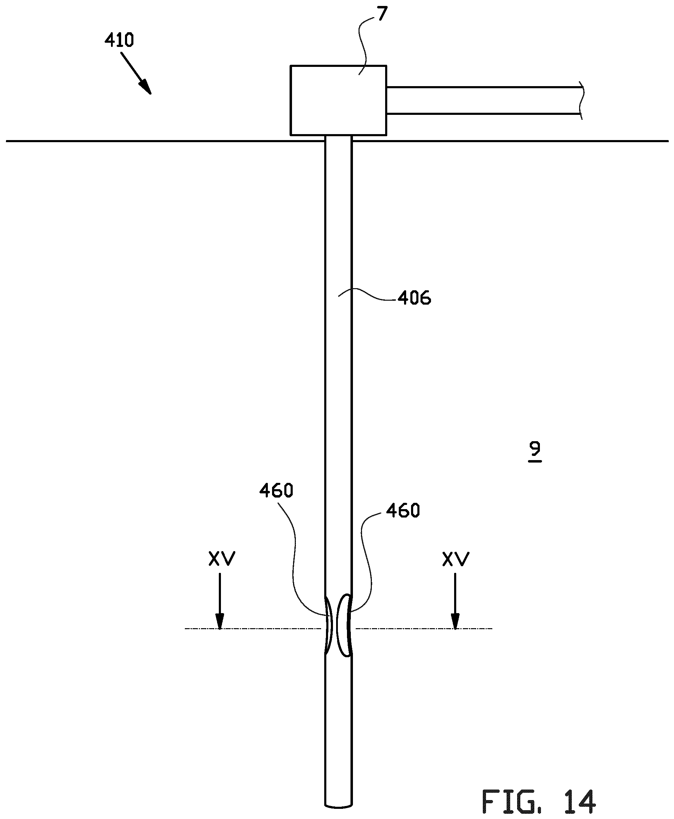

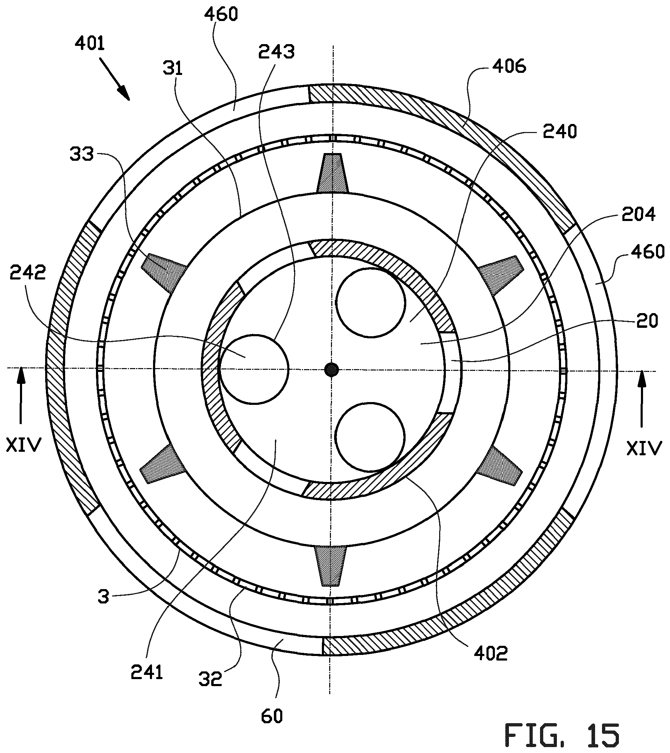

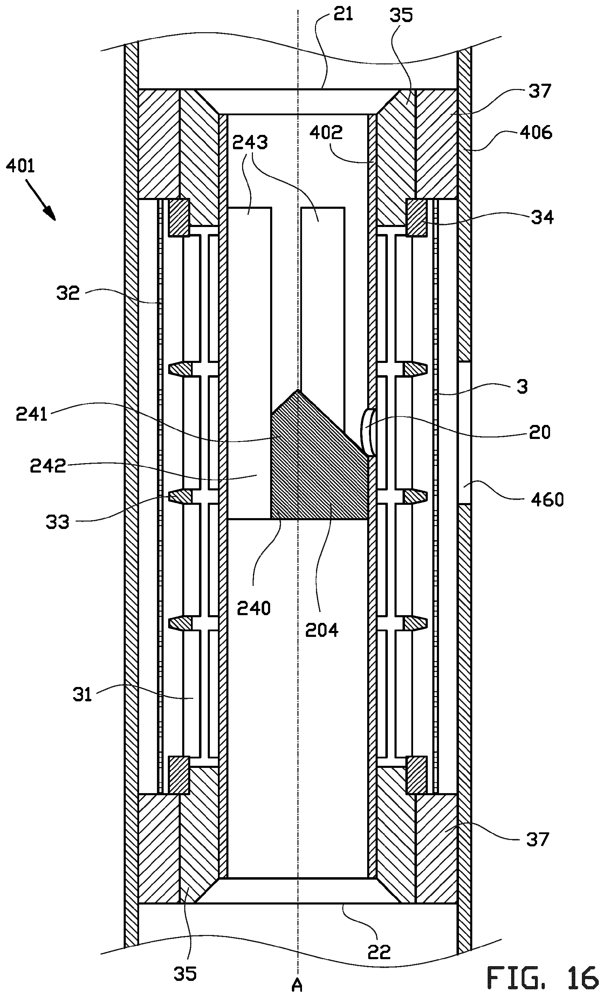

Figures 14-16 show a further alternative system 410 according to the present invention. The system 410 comprises an alternative fluid duct 406 and an alternative infiltration head 401 arranged within said fluid duct 406.

The infiltration head 401 comprises an alternative infiltration tube 402 corresponding to the infiltration tube 302 as described above. In this embodiment, the filter assembly 3 comprises two first collars 35 supporting the first filter 31 and two second collars 37 supporting the second filter 32. Said collars 35, 37 are arranged between the fluid duct 406 and the first end 21 and the second end 22, respectively, of the infiltration tube 402. The collars 35, 37 are arranged to create a water tight connection between the infiltration tube 402 and the fluid duct 406. In other words, the water flow W through the fluid duct 6 is forced to flow through the infiltration tube 402.

The fluid duct 406 comprises three through holes 460. The through holes 460 extend through the fluid duct 6 in the radial direction R. The through holes 460 are in line with the apertures 20. The through holes 460 have a larger diameter than the apertures 20. The water flow W may thus be dispensed into the aquifer 9 via the apertures 20 and the through holes 460.

It is to be understood that the above description is included to illustrate the operation of the preferred embodiments and is not meant to limit the scope of the invention. From the above discussion, many variations will be apparent to one skilled in the art that would yet be encompassed by the scope of the present invention, as defined in the appended claims.

## Claims

1. Infiltration head (1, 101, 201, 301, 401) for dispensing water into an aquifer (9), wherein the infiltration head (1, 101, 201, 301, 401) comprises an infiltration tube (2, 102, 202, 302, 402) having a first end (21) and a second end (22) and a central axis (A) extending in an axial direction (X) between said first end (21) and said second end (22), wherein the first end (21) is arranged for allowing a water flow (W) to enter the infiltration tube (2, 102, 202, 302, 402), wherein the infiltration tube (2, 102, 202, 302, 402) comprises a circumferential wall (23) extending circumferentially about the central axis (X) in a circumferential direction (C), wherein one or more apertures (20) are provided at an axial position between the first end (21) and the second end (22), wherein said one or more apertures (20) extend through said circumferential wall (23) in a radial direction (R) transverse to the central axis (X), **characterized in that** the infiltration head (1, 101, 201, 301, 401) further comprises a deflector (4, 104, 204) which is positioned within the infiltration tube (2, 102, 202, 302, 402) at or near the axial position of the one or more apertures (20), wherein the deflector (4, 104, 204) comprises a deflector body (40, 140, 240) having a deflection portion (41, 141, 241) which is configured for deflecting a flow direction of the water flow (W) from a first direction parallel or substantially parallel to the central axis (A) to a second direction towards the one or more apertures (20), wherein the deflection portion (41, 141, 241) is tapered towards the first end (21) of the infiltration tube (2, 102, 202, 302, 402).

2. Infiltration head (1, 101, 201, 301, 401) according to claim 1, wherein the second direction is transverse to the central axis (A); and/or
wherein the deflection portion (41, 141, 241) has a conical shape, a substantially conical shape or a frusto-conical shape.

3. Infiltration head (1, 101, 201, 301, 401) according to claim 1 or 2, wherein two or more apertures (20) are provided at or near the axial position between the first end (21) and the second end (22), wherein said two or more apertures (20) extend through said circumferential wall (23) in the radial direction (R) transverse to the central axis (A), preferably
wherein the two or more apertures (20) are evenly distributed in the circumferential direction (C).

4. Infiltration head (1, 101, 201, 301, 401) according to claim 1, 2 or 3, wherein three apertures (20) are provided at or near the axial position between the first end (21) and the second end (22), wherein said three apertures (20) extend through said circumferential wall (23) in the radial direction (R) transverse to the central axis (A), preferably
wherein said three apertures (20) are arranged at mutual angles of one-hundred-and-twenty degrees in the circumferential direction (C).

5. Infiltration head (1, 101, 201, 301, 401) according to any of the claims 3-4, wherein the infiltration tube (2, 102, 202, 302, 402) defines an infiltration tube flow area between the axial position and the first end (21) and wherein each of the two or more apertures (20) has an aperture flow area, wherein the infiltration tube flow area is larger than the sum of the aperture flow areas.

6. Infiltration head (101, 201) according to any of the preceding claims, wherein the deflector (104, 204) comprises one or more through holes (142, 242) extending through the deflector body (140, 240) in the axial direction (X) for allowing at least a part of the water flow (W) to flow past the deflector (104, 204) in the axial direction (X); preferably
wherein the one or more through holes (140, 240) are offset in the circumferential direction (C) with respect to the one or more apertures (20); and/or
wherein the deflector (204) further comprises one or more pipes (243), each extending through a respective one of the one or more through holes (242), and wherein the one or more pipes (243) protrude from the deflector (204) towards the first end (21) of the infiltration tube (202).

7. Infiltration head (1, 101, 201, 301, 401) according to any of the preceding claims, wherein the infiltration head (1, 101, 201, 301, 401) further comprises a filter assembly (3) which is arranged circumferentially about at least a part of the infiltration tube (2, 102, 202, 302, 402) in the axial direction (X) and/or the circumferential direction (C) for preventing soil from entering the infiltration tube (2, 102, 202, 302, 402) through said one or more apertures (20); preferably
wherein the filter assembly (3) comprises a first filter (31) and a second filter (32), wherein the second filter (32) is arranged concentric with respect to the first filter (31) and spaced apart from said first filter (31) in the radial direction (R); preferably
wherein the first filter (31) has a first mesh size and is configured to prevent sand or soil particles to pass through the first filter (31); and/or
wherein the second filter (32) has a second mesh size which is larger than the first mesh size.

8. Infiltration head (201, 301) according to any of the preceding claims, wherein the infiltration tube (202, 302) comprises one or more slotted tube portions (225; 325, 326), wherein said slotted tube portion (225; 325, 326) comprises a plurality of slots (29) extending through the circumferential wall (23) in the radial direction (R); preferably
wherein at least one slotted tube portion (225, 325) of the one or more slotted tube portions (225; 325, 326) is located between the first end (21) and the axial position of the one or more apertures (20); and/or
wherein at least one slotted tube portion (225, 326) of the one or more slotted tube portions (225; 325 326) is located between the axial position of the one or more apertures (20) and the second end (22).

9. Infiltration head (101, 201) according to any of the preceding claims, wherein the one or more apertures (20) are first apertures (20) provided at a first axial position between the first end (21) and the second end (22) and wherein the deflector (104, 204) is a first deflector (104, 204), wherein the infiltration tube (102, 202) is further provided with one or more second apertures (20) which extend through the circumferential wall (23) in the radial direction (R) at a second axial position between the first axial position and the second end (22), wherein the infiltration head (101, 201) further comprises a second deflector (4, 104, 204) which is positioned within the infiltration tube (102, 202) at or near the second axial position and which is configured for deflecting a flow direction of the water flow (W) from the first direction to a third direction towards the one or more second apertures (20); preferably
wherein the third direction is transverse to the central axis (A); and/or
wherein the number of the one or more second apertures (20) corresponds to the number of the one or more first apertures (20); and/or
wherein each of the one or more second apertures (20) is offset in the circumferential direction (C) with respect to the one or more first apertures (20); and/or
wherein the infiltration tube (202) comprises a slotted tube portion (225) which is located between the first axial position and the second axial position, wherein said slotted tube portion (225) comprises a plurality of slots (29) extending through the circumferential wall (23) in the radial direction (R).

10. Infiltration head (1, 101, 201, 301, 401) according to any of the preceding claims, wherein the infiltration tube (2, 102, 202, 302, 402) has an internal diameter (D) between thirty and two-hundred millimeters, preferably between forty and one-hundred-and-fifty millimeters, more preferably between fifty and one-hundred millimeters.

11. System (10, 110, 210, 310, 410) for dispensing water into an aquifer (9), **characterized in that** the system comprises the infiltration head (1, 101, 201, 301, 401) according to any of the preceding claims, and a water source, wherein the infiltration head (1, 101, 201, 301, 401) is in fluid communication with said water source.

12. System according to claim 11, wherein the system comprises a fluid duct (6, 406) for connecting the infiltration head (1, 101, 201, 301, 401) to the water source; preferably
wherein the infiltration tube (2, 102, 202, 302, 402) of the infiltration head (1, 101, 201, 301, 401) comprises at least a part of the fluid duct (6); or
wherein the fluid duct (406) comprises one or more through holes (460) in the radial direction (R) corresponding to and in line with the one or more apertures (20) in the infiltration tube (402).

13. System (10, 110, 210, 310, 410) according to claim 11 or 12, wherein the system (10, 110, 210, 310, 410) further comprises a pump (7) and/or a drain operationally connected to the water source and the fluid duct (6, 406) for supplying the water flow (W) to the infiltration head (1, 101, 201, 301, 401) via said fluid duct (6, 406).

14. Method for dispensing water into an aquifer (9) using a system (10, 110, 210, 310, 410) according to any of the claims 11-13, wherein the method comprises the steps of:
drilling a well bore;
inserting the fluid duct (6, 406) and the associated infiltration head (1, 101, 201, 301, 401) in said well bore; and
supplying a water flow (W) to the infiltration head (1, 101, 201, 301, 401) via the fluid duct (6, 406) such that the water flow (W) enters the infiltration head (1, 101, 201, 301, 401) at the first end (21) of the infiltration tube (2, 102, 202, 302, 402) and the water flow (W) is deflected by the deflector (4, 104, 204, 304, 404), in particular by the deflection portion (41, 141, 241), towards the one or more apertures (20).

15. Method according to claim 14, wherein the water flow (W) is supplied to the infiltration head (1, 101, 201, 301, 401) at a pressure of at least 0.2 bar, preferably at least one bar, most preferably at least two bar; and/or
wherein the method comprises the steps of:
(i) providing a drill formed by a drilling tube provided at an outer end with a drilling head with a central opening;
(ii) inserting the drill into the ground while simultaneously supplying a drilling liquid into the drill, wherein the supplied drilling liquid initially wells up via the drilling head along the outer side of the drilling tube until the drilling head has reached a depth at which the supplied liquid no longer wells up;
(iii) ceasing insertion of the drill into the ground and supply of drilling liquid into the drill as soon as the supplied drilling liquid no longer wells up;
(iv) inserting into the drilling tube the fluid duct (4, 406) and the associated infiltration head (1, 101, 201, 301, 401) according to the system (10, 110, 210, 310, 410) such that the infiltration head (1, 101, 201, 301, 401) is at or near the depth at which the supplied liquid no longer wells up;
(v) removing the drill from the ground; and
(vi) supplying the water flow (W) to the infiltration head (1, 101, 201, 301, 401) via the fluid duct (6, 406).

## Patentansprüche

1. Infiltrationskopf (1, 101, 201, 301, 401) zur Abgabe von Wasser in einen Grundwasser-leiter (9), wobei der Infiltrationskopf (1, 101, 201, 301, 401) eine Infiltrationsröhre (2, 102, 202, 302, 402) mit einem ersten Ende (21) und einem zweiten Ende (22) und eine zentrale Achse (A) aufweist, die in einer axialer Richtung (X) zwischen dem ersten Ende (21) und dem zweiten Ende (22) verläuft, wobei das erste Ende (21) dazu aus-gestaltet ist, einer Wasserströmung (W) Eintritt in die Infiltrationsröhre (2, 102, 202, 302, 402) zu erlauben, wobei die Infiltrationsröhre (2, 102, 202, 302, 402) eine Umfangswand (23) aufweist, die in einer Umfangsrichtung (C) um die zentrale Achse (X) verläuft, wobei eine oder mehrere Öffnungen an einer axialen Position zwischen dem ersten Ende (21) und dem zweiten Ende (22) vorgesehen sind, wobei die eine oder die mehreren Öffnungen (20) in einer radialen Richtung (R) quer zur zentralen Achse (X) durch die Umfangswand (23) verlaufen, **dadurch gekennzeichnet, dass** der Infiltrationskopf (1, 101, 201, 301, 401) weiterhin einen Umleiter (4, 104, 204) aufweist, der innerhalb der Infiltrationsröhre (2, 102, 202, 302, 402) bei oder nahe der axialen Position der einen oder der mehreren Öffnungen (20) positioniert ist, wobei der Umleiter (4, 104, 204) einen Umleitkörper (40, 140, 240) umfasst, der einen Umleitbereich (41, 141, 241) hat, der dazu ausgestaltet ist, eine Fließrichtung der Wasserströmung (W) von einer ersten Richtung parallel oder im Wesentlichen parallel zur zentralen Achse (A) in eine zweite Richtung zu der einen oder den mehreren Öffnungen (20) hin umzuleiten, wobei der Umleitbereich (41, 141, 241) sich zu dem ersten Ende (21) der Infiltrationsröhre (2, 102, 202, 302, 402) hin verjüngt.

2. Infiltrationskopf (1, 101, 201, 301, 401) nach Anspruch 1, wobei die zweite Richtung quer zur zentralen Achse (A) verläuft und/oder
wobei der Umleitbereich (41, 141, 241) kegelförmig, im Wesentlichen kegelförmig oder kegelstumpfförmig ist.

3. Infiltrationskopf (1, 101, 201, 301, 401) gemäß Anspruch 1 oder 2, wobei an oder nahe der axialen Position zwischen dem ersten Ende (21) und dem zweiten Ende (22) zwei oder mehr Öffnungen (20) vorgesehen sind, wobei die zwei oder mehr Öffnungen (20) in radialer Richtung quer zur zentralen Achse (A) durch die Umfangswand (23) verlaufen, vor-zugsweise
wobei die zwei oder mehr Öffnungen (20) in Umfangsrichtung (C) gleichmäßig verteilt sind.

4. Infiltrationskopf (1, 101, 201, 301, 401) gemäß Anspruch 1, 2 oder 3, wobei an oder nahe der axialen Position zwischen dem ersten Ende (21) und dem zweiten Ende (22) drei Öffnungen (20) vorgesehen sind, wobei die drei Öffnungen (20) in radialer Richtung (R) quer zur zentralen Achse (A) durch die Umfangswand (23) verlaufen, vor-zugsweise
wobei die drei Öffnungen (20) zueinander in Winkeln von 120° in Umfangsrichtung (C) angeordnet sind.

5. Infiltrationskopf (1, 101, 201, 301, 401) gemäß einem der Ansprüche 3-4, wobei die Infiltrationsröhre (2, 102, 202, 302, 402) eine Infiltrationsröhrenfließfläche zwischen der axialen Position und dem ersten Ende (21) definiert und wobei jede der zwei oder mehr Öffnungen (20) eine Öffnungsfließfläche hat, wobei die Infiltrationsröhrenfließ-fläche größer als die Summe der Öffnungsfließflächen ist.

6. Infiltrationskopf (1, 101, 201, 301, 401) gemäß einem der vorhergehenden Ansprüche, wobei der Umleiter (104, 204) eine oder mehrere Durchgangsöffnungen (142, 242) auf-weist, die in der axialen Richtung (X) durch den Umleitkörper (140, 240) verlaufen, um wenigstens einem Teil der Wasserströmung (W) zu ermöglichen, in der axialen Richtung (X) am Umleiter (104, 204) vorbeizufließen, vorzugsweise
wobei die eine oder die mehreren Durchgangsöffnungen (140, 240) in Umfangsrichtung (C) bezüglich der einen oder mehreren Öffnungen (20) versetzt sind und/oder
wobei der Umleiter (204) eine oder mehrere Rohrleitungen (243) aufweist, von denen jede durch eine jeweilige der einen oder mehreren Durchgangsöffnungen (242) verläuft, und wobei die eine oder die mehreren Rohrleitungen (243) vom Umleiter (204) zum ersten Ende (21) der Infiltrationsröhre (202) hin vorstehen.

7. Infiltrationskopf (1, 101, 201, 301, 401) nach einem der vorhergehenden Ansprüche, wobei der Infiltrationskopf (1, 101, 201, 301, 401) weiterhin einen Filteraufbau (3) aufweist, der in Umfangsrichtung um wenigstens einen Teil der Infiltrationsröhre (2, 102, 202, 302, 402) in axialer Richtung (X) und/oder in der Umfangsrichtung (C) angeordnet ist, um zu verhindern, dass Erdreich durch die eine oder die mehreren Öffnungen (20) in die Infiltrationsröhre (2, 102, 202, 302, 402) eindringt; vorzugsweise
wobei der Filteraufbau (3) einen ersten Filter (31) und in radialer Richtung (R) einen zweiten Filter (32) umfasst, wobei der zweite Filter (32) konzentrisch zum ersten Filter (31) und auf Abstand zum ersten Filter (31) angeordnet ist, vorzugsweise
wobei der erste Filter (31) eine erste Maschenweite hat und dazu ausgestaltet ist, um zu verhindern, dass Sand- oder Erdreichpartikel den ersten Filter (31) passieren, und/oder
wobei der zweite Filter (32) eine zweite Maschenweite hat, die größer als die erste Maschenweite ist.

8. Infiltrationskopf (201, 301) nach einem der vorhergehenden Ansprüche, wobei die Infiltrationsröhre (202, 302) einen oder mehrere geschlitzte Röhrenbereiche (225; 325, 326) aufweist, wobei der geschlitzte Bereich (225; 325, 326) eine Mehrzahl von Schlitzen (29) aufweist, die in radialer Richtung (R) durch die Umfangswand (23) hindurch verlaufen, vorzugsweise
wobei wenigstens ein geschlitzter Bereich (225, 325) des einen oder der mehreren geschlitzten Bereiche (225; 325, 326) sich zwischen dem ersten Ende (21) und der axialen Position der einen oder mehreren Öffnungen (20) befindet und/oder
wobei wenigstens ein geschlitzter Röhrenbereich (225, 326) des einen oder der mehreren geschlitzten Röhrenbereiche (225, 325, 326) sich zwischen der axialen Position der einen oder mehreren Öffnungen (20) und dem zweiten Ende (22) befindet.

9. Infiltrationskopf (101, 201) nach einem der vorhergehenden Ansprüche, wobei die eine oder die mehreren Öffnungen (20) erste Öffnungen (20) sind, die an einer ersten axialen Position zwischen dem ersten Ende (21) und dem zweite Ende (22) vorgesehen sind, und wobei der Umleiter (104, 204) ein erster Umleiter (104, 204) ist, wobei die Infiltrationsröhre (102, 202) weiterhin mit einer oder mehren zweiten Öffnungen (20) versehen ist, die an einer zweiten axialen Position zwischen der ersten axialen Position und dem zweiten Ende (22) in radialer Richtung (R) durch die Umfangswand (23) hin-durch verlaufen, wobei der Infiltrationskopf (101, 201) ferner einen zweiten Umleiter (4, 104, 204) aufweist, der innerhalb der Infiltrationsröhre (102, 202) an oder nahe der zweiten axialen Position positioniert ist und der dazu ausgestaltet ist, eine Strömungs-richtung der Wasserströmung (W) aus der ersten Richtung in eine dritte Richtung zu der einen oder den mehreren zweiten Öffnungen (20) hin umzuleiten, vorzugsweise
wobei die dritte Richtung quer zur zentralen Achse (A) verläuft und/oder
wobei die Anzahl der einen oder der mehreren zweiten Öffnungen der Anzahl der einen oder der mehreren ersten Öffnungen (20) entspricht, und/oder
wobei jede der einen oder der mehreren zweiten Öffnungen (20) in Umfangsrichtung (C) in Bezug auf die eine oder die mehreren ersten Öffnungen (20) versetzt sind, und/oder
wobei die Infiltrationsröhre (202) einen geschlitzten Röhrenbereich (225) aufweist, der sich zwischen der ersten axialen Position und der zweiten axialen Position befindet, wobei der geschlitzte Röhrenbereich (225) eine Mehrzahl von Schlitzen (29) aufweist, die in radialer Richtung (R) durch die Umfangswand (23) hindurch verlaufen.

10. Infiltrationskopf (1, 101, 201, 301, 401) nach einem der vorhergehenden Ansprüche, wobei die Infiltrationsröhre (2, 102, 202, 302, 402) einen Innendurchmesser (D) zwischen 30 und 200 mm hat, vorzugsweise zwischen 40 und 150 mm, besonders bevorzugt zwischen 50 und 100 mm.

11. System (10, 110, 210, 310, 410) zum Abgeben von Wasser in einen Grundwasserleiter (9), **dadurch gekennzeichnet, dass** das System den Infiltrationskopf (1, 101, 201, 301, 401) nach einem der vorhergehenden Ansprüche und eine Wasserquelle auf-weist, wobei der Infiltrationskopf (1, 101, 201, 301, 401) in Fließverbindung mit der Wasserquelle steht.

12. System nach Anspruch 11, wobei das System eine Fluidleitung (6, 406) aufweist, um den Infiltrationskopf (1, 101, 201, 301, 401) mit der Wasserquelle zu verbinden, vor-zugsweise
wobei die Infiltrationsröhre (2, 102, 202, 302, 402) des Infiltrationskopfes (1, 101, 201, 301, 401) wenigstens einen Teil der Fluidleitung (6) umfasst, oder
wobei die Fluidleitung (406) eine oder mehrere Durchgangsöffnungen (460) in radialer Richtung (R) aufweist, die der einen oder den mehreren Öffnungen (20) in der Infiltrationsröhre (402) entsprechen und mit diesen ausgerichtet sind.

13. System (10, 110, 210, 310, 410) nach Anspruch 11 oder 12, wobei das System (10, 110, 210, 310, 410) ferner eine Pumpe (7) und/oder einen Abfluss in betriebsmäßiger Verbindung mit der Wasserquelle und die Fluidleitung (6, 406) aufweist, um die Wasserströmung (W) durch die Fluidleitung (6, 406) dem Infiltrationskopf (1, 101, 201, 301, 401) zuzuführen.

14. Verfahren zum Abgeben von Wasser in einen Grundwasserleiter (9) unter Verwendung eines Systems (10, 110, 210, 310, 410) nach einem der Ansprüche 11-13, wobei das Verfahren die Schritte beinhaltet:
Bohren eines Bohrlochs,
Einführen der Fluidleitung (6, 406) und des zugehörigen Infiltrationskopfes (1, 101, 201, 301, 401) in das Bohrloch, und
Zuführen einer Wasserströmung (W) zum Infiltrationskopf (1, 101, 201, 301, 401) durch die Fluidleitung (6, 406), so dass die Wasserströmung (W) am ersten Ende (21) der Infiltrationsröhre (2, 102, 202, 302, 402) in den Infiltrationskopf (1, 101, 201, 301, 401) eintritt und die Wasserströmung (W) durch den Umleiter (4, 104, 204, 304, 404) umgeleitet wird, insbesondere durch den Umleitbereich (41, 141, 241) zu der einen oder den mehreren Öffnungen (20) hin umgeleitet wird.

15. Verfahren nach Anspruch 14, wobei die Wasserströmung (W) dem Infiltrationskopf (1, 101, 201, 301, 401) mit einem Druck von wenigstens 0,2 Bar, vorzugsweise von wenigstens 1 Bar, und besonders bevorzugt von wenigstens 2 Bar zugeführt wird, und/oder
wobei das Verfahren die Schritte beinhaltet:
(i) Bereitstellen eines Bohrers, der durch ein Bohrrohr gebildet ist, das an einem Ende mit einem Bohrkopf mit einer zentralen Öffnung versehen ist,
(ii) Einführen des Bohrers in den Boden, während dem Bohrer gleichzeitig Bohrflüssigkeit zugeführt wird, wobei die zugeführte Bohrflüssigkeit an-fangs durch den Bohrkopf entlang der Außenseite des Bohrrohrs ansteigt, bis der Bohrkopf eine Tiefe erreicht hat, bei der die zugeführte Flüssigkeit nicht mehr ansteigt,
(iii) Beenden der Einführung des Bohrers in den Boden und der Zufuhr von Bohrflüssigkeit in den Bohrer, sobald die zugeführte Bohrflüssigkeit nicht mehr ansteigt,
(iv) Einführen der Fluidleitung (4, 406) und des zugehörigen Infiltrationskopfes (1, 101, 201, 301, 401) gemäß dem System (10, 110, 210, 310, 410) in das Bohrrohr, so dass der Infiltrationskopf (1, 101, 201, 301, 401) bei oder nahe der Tiefe ist, bei der die zugeführte Flüssigkeit nicht mehr ansteigt,
(v) Entfernen des Bohrers aus dem Boden und
(vi) Leiten der Wasserströmung (W) über die Fluidleitung (6, 406) zum Infiltrationskopf (1, 101, 201, 301, 401).

## Revendications

1. Tête d'infiltration (1, 101, 201, 301, 401) pour distribuer de l'eau dans un aquifère (9), dans laquelle la tête d'infiltration (1, 101, 201, 301, 401) comprend un tube d'infiltration (2, 102, 202, 302, 402) ayant une première extrémité (21) et une seconde extrémité (22) et un axe central (A) s'étendant dans une direction axiale (X) entre ladite première extrémité (21) et ladite seconde extrémité (22), dans laquelle la première extrémité (21) est agencée pour permettre à un écoulement d'eau (W) d'entrer dans le tube d'infiltration (2, 102, 202, 302, 402), dans laquelle le tube d'infiltration (2, 102, 202, 302, 402) comprend une paroi circonférentielle (23) s'étendant circonférentiellement autour de l'axe central (X) dans une direction circonférentielle (C), dans laquelle une ou des ouvertures (20) sont prévues au niveau d'une position axiale entre la première extrémité (21) et la seconde extrémité (22), dans laquelle ladite une ou lesdites ouvertures (20) s'étendent à travers ladite paroi circonférentielle (23) dans une direction radiale (R) transversale à l'axe central (X), **caractérisée en ce que** la tête d'infiltration (1, 101, 201, 301, 401) comprend en outre un déflecteur (4, 104, 204) qui est positionné dans le tube d'infiltration (2, 102, 202, 302, 402) au niveau ou à proximité de la position axiale de la ou des ouvertures (20), dans laquelle le déflecteur (4, 104, 204) comprend un corps de déflecteur (40, 140, 240) ayant une portion de déflection (41, 141, 241) qui est configurée pour dévier une direction d'écoulement de l'écoulement d'eau (W) d'une première direction parallèle ou sensiblement parallèle à l'axe central (A) vers une seconde direction en direction de la ou des ouvertures (20), dans laquelle la portion de déflection (41, 141, 241) est effilée en direction de la première extrémité (21) du tube d'infiltration (2, 102, 202, 302, 402).

2. Tête d'infiltration (1, 101, 201, 301, 401) selon la revendication 1, dans laquelle la seconde direction est transversale à l'axe central (A) ; et/ou
dans laquelle la portion de déflection (41, 141, 241) a une forme conique, une forme sensiblement conique ou une forme frustoconique.

3. Tête d'infiltration (1, 101, 201, 301, 401) selon la revendication 1 ou 2, dans laquelle deux ouvertures (20) ou plus sont prévues au niveau ou à proximité de la position axiale entre la première extrémité (21) et la seconde extrémité (22), dans laquelle lesdites deux ouvertures (20) ou plus s'étendent à travers ladite paroi circonférentielle (23) dans la direction radiale (R) transversale à l'axe central (A), de préférence
dans laquelle les deux ouvertures (20) ou plus sont réparties de manière uniforme dans la direction circonférentielle (C).

4. Tête d'infiltration (1, 101, 201, 301, 401) selon la revendication 1, 2 ou 3, dans laquelle trois ouvertures (20) sont prévues au niveau ou à proximité de la position axiale entre la première extrémité (21) et la seconde extrémité (22), dans laquelle lesdites trois ouvertures (20) s'étendent à travers la dite paroi circonférentielle (23) dans la direction radiale (R) transversale à l'axe central (A), de préférence
dans laquelle lesdites trois ouvertures (20) sont agencées à des angles mutuels de cent vingt degrés dans la direction circonférentielle (C).

5. Tête d'infiltration (1, 101, 201, 301, 401) selon l'une quelconque des revendications 3 à 4, dans laquelle le tube d'infiltration (2, 102, 202, 302, 402) définit une section d'écoulement du tube d'infiltration entre la position axiale et la première extrémité (21) et dans laquelle chacune des deux ouvertures (20) ou plus a une section d'écoulement de l'ouverture, dans laquelle la section d'écoulement du tube d'infiltration est supérieure à la somme des sections d'écoulement de l'ouverture.

6. Tête d'infiltration (101, 201) selon l'une quelconque des revendications précédentes, dans laquelle le déflecteur (104, 204) comprend un ou plusieurs trous débouchants (142, 242) s'étendant à travers le corps de déflecteur (140, 240) dans la direction axiale (X) pour permettre à au moins une partie de l'écoulement d'eau (W) de traverser le déflecteur (104, 204) dans la direction axiale (X) ; de préférence
dans laquelle la ou les trous débouchants (140, 240) sont décalés dans la direction circonférentielle (C) par rapport à la ou aux ouvertures (20) ; et/ou
dans laquelle le déflecteur (204) comprend en outre un ou plusieurs tuyaux (243), chacun s'étendant à travers un trou débouchant respectif du ou des trous débouchants (242), et dans laquelle le ou les tuyaux (243) font saillie depuis le déflecteur (204) en direction de la première extrémité (21) du tube d'infiltration (202).

7. Tête d'infiltration (1, 101, 201, 301, 401) selon l'une quelconque des revendications précédentes, dans laquelle la tête d'infiltration (1, 101, 201, 301, 401) comprend en outre un ensemble de filtres (3) qui est agencé circonférentiellement autour d'au moins une partie du tube d'infiltration (2, 102, 202, 302, 402) dans la direction axiale (X) et/ou la direction circonférentielle (C) pour empêcher la terre d'entrer dans le tube d'infiltration (2, 102, 202, 302, 402) à travers la ou les ouvertures (20) ; de préférence
dans laquelle l'ensemble de filtres (3) comprend une premier filtre (31) et un second filtre (32), dans lequel le second filtre (32) est agencé concentriquement par rapport au premier filtre (31) et espacé dudit premier filtre (31) dans la direction radiale (R); de préférence
dans laquelle le premier filtre (31) a une première taille de maille et est configuré pour empêcher les particules de sable ou de terre de traverser le premier filtre (31) ; et/ou
dans laquelle le second filtre (32) a une seconde taille de maille qui est supérieure à la première taille de maille.

8. Tête d'infiltration (201, 301) selon l'une quelconque des revendications précédentes, dans laquelle le tube d'infiltration (202, 302) comprend une ou plusieurs portions de tube rainurées (225 ; 325, 326), dans laquelle ladite portion de tube rainurée (225 ; 325, 326) comprend une pluralité de rainures (29) s'étendant à travers la paroi circonférentielle (23) dans la direction radiale (R) ; de préférence
dans laquelle au moins une portion de tube rainurée (225, 325) de la ou des portions de tube rainurées (225 ; 325, 326) est située entre la première extrémité (21) et la position axiale de la ou des ouvertures (20) ; et/ou
dans laquelle au moins une portion de tube rainurée (225, 326) de la ou des portions de tube rainurées (225 ; 325, 326) est située entre la position axiale de la ou des ouvertures (20) et la seconde extrémité (22).

9. Tête d'infiltration (101, 201) selon l'une quelconque des revendications précédentes, dans laquelle la ou les ouvertures (20) sont de premières ouvertures (20) prévues au niveau d'une première position axiale entre la première extrémité (21) et la seconde extrémité (22) et dans laquelle le déflecteur (104, 204) est un premier déflecteur (104, 204), dans laquelle le tube d'infiltration (102, 202) est en outre pourvu d'une ou de plusieurs secondes ouvertures (20) qui s'étendent à travers la paroi circonférentielle (23) dans la direction radiale (R) au niveau d'une seconde position axiale entre la première position axiale et la seconde extrémité (22), dans laquelle la tête d'infiltration (101, 201) comprend en outre un second déflecteur (4, 104, 204) qui est positionné dans le tube d'infiltration (102, 202) au niveau ou à proximité de la seconde position axiale et qui est configuré pour dévier une direction d'écoulement de l'écoulement d'eau (W) de la première direction vers une troisième direction en direction de la ou des secondes ouvertures (20) ; de préférence
dans laquelle la troisième direction est transversale à l'axe central (A) et/ou
dans laquelle le nombre de la ou des secondes ouvertures (20) correspond au nombre de la ou des premières ouvertures (20) ; et/ou
dans laquelle chacune de la ou des secondes ouvertures (20) est décalée dans la direction circonférentielle (C) par rapport à la ou aux premières ouvertures (20) ; et/ou
dans laquelle le tube d'infiltration (202) comprend une portion de tube rainurée (225) qui est située entre la première position axiale et la seconde position axiale, dans laquelle ladite portion de tube rainurée (225) comprend une pluralité de rainures (29) s'étendant à travers la paroi circonférentielle (23) dans la direction radiale (R).

10. Tête d'infiltration (1, 101, 201, 301, 401) selon l'une quelconque des revendications précédentes, dans laquelle le tube d'infiltration (2, 102, 202, 302, 402) a un diamètre interne (D) entre trente et deux cents millimètres, de préférence entre quarante et cent cinquante millimètres, plus préférablement entre cinquante et cent millimètres.

11. Système (10, 110, 210, 310, 410) pour distribuer de l'eau dans un aquifère (9), **caractérisé en ce que** le système comprend la tête d'infiltration (1, 102, 201, 301, 401) selon l'une quelconque des revendications précédentes, et une source d'eau, dans lequel la tête d'infiltration (1, 101, 201, 301, 401) est en communication fluidique avec ladite source d'eau.

12. Système selon la revendication 11, dans lequel le système comprend un premier conduit de fluide (6, 406) pour raccorder la tête d'infiltration (1, 101, 201, 301, 401) à la source d'eau ; de préférence
dans lequel le tube d'infiltration (2, 102, 202, 302, 402) de la tête d'infiltration (1, 101, 201, 301, 401) comprend au moins une partie du conduit de fluide (6) ; ou
dans lequel le conduit de fluide (406) comprend un ou plusieurs trous débouchants (460) dans la direction radiale (R) correspondant et conformément à la ou aux ouvertures (20) dans le tube d'infiltration (402).

13. Système (10, 110, 210, 310, 410) selon la revendication 11 ou 12, dans lequel le système (10, 110, 210, 310, 410) comprend en outre une pompe (7) et/ou une évacuation opérationnellement raccordée à la source d'eau et au conduit de fluide (6, 406) pour introduire l'écoulement d'eau (W) dans la tête d'infiltration (1, 101, 201, 301, 401) par l'intermédiaire dudit conduit de fluide (6, 406).

14. Procédé pour distribuer de l'eau dans un aquifère (9) à l'aide d'un système (10, 110, 210, 310, 410) conformément à l'une quelconque des revendications 11 à 13, dans lequel le procédé comprend les étapes de :
forage d'un puits de forage ;
insertion du conduit de fluide (6, 406) et de la tête d'infiltration associée (1, 101, 201, 301, 401) dans ledit puits de forage ; et
introduction d'un écoulement d'eau (W) dans la tête d'infiltration (1, 101, 201, 301, 401) par l'intermédiaire du conduit de fluide (6, 406) de sorte que l'écoulement d'eau (W) entre dans la tête d'infiltration (1, 101, 201, 301, 401) au niveau de la première extrémité (21) du tube d'infiltration (2, 102, 202, 302, 402) et l'écoulement d'eau (W) est dévié par le déflecteur (4, 104, 204, 304, 404), en particulier par la portion de déflection (41, 141, 241), en direction de la ou des ouvertures (20).

15. Procédé selon la revendication 14, dans lequel l'écoulement d'eau (W) est introduit dans la tête d'infiltration (1, 101, 201, 301, 401) à une pression d'au moins 0,2 bar, de préférence au moins un bar, le plus préférablement au moins deux bars ; et/ou
dans lequel le procédé comprend les étapes de :
(i) fourniture d'un foret formé par un tube de forage pourvu au niveau d'une extrémité extérieure d'une tête de forage ayant une ouverture centrale ;
(ii) insertion du foret dans le sol tout en introduisant simultanément un fluide de forage dans le foret, dans lequel le fluide de forage introduit monte initialement par l'intermédiaire de la tête de forage le long du côté extérieur du tube de forage jusqu'à ce que la tête de forage ait atteint une profondeur à laquelle le fluide introduit ne monte plus ;
(iii) arrêt de l'insertion du foret dans le sol et de l'introduction du fluide de forage dans le foret dès que le fluide de forage introduit ne monte plus ;
(iv) insertion du conduit de fluide (4, 406) et de la tête d'infiltration associée (1, 101, 201, 301, 401) dans le tube de forage selon le système (10, 110, 210, 310, 410) de sorte que la tête d'infiltration (1, 101, 201, 301, 401) est au niveau ou à proximité de la profondeur à laquelle le fluide introduit ne monte plus ;
(v) retrait du foret du sol ; et
(vi) introduction de l'écoulement d'eau (W) dans la tête d'infiltration (1, 101, 201, 301, 401) par l'intermédiaire du conduit (6, 406).
